# EUROPÄISCHE PATENTSCHRIFT

(11) **EP 1 154 967 B1**
(45) Veröffentlichungstag und Bekanntmachung des Hinweises auf die Patenterteilung: **07.08.2002**
(21) Anmeldenummer: 00910652.7
(22) Anmeldetag: 08.02.2000
(51) Int. Cl.: C04B 20/10, C04B 24/32, C04B 24/26, C08L 71/00, C08J 3/20

(54) **PULVERFÖRMIGE POLYMERZUSAMMENSETZUNGEN AUF DER BASIS VON POLYETHERCARBOXYLATEN**
POWDERY POLYETHERCARBOXYLATE-BASED POLYMERIC COMPOSITIONS
COMPOSITIONS POLYMERES EN POUDRE A BASE DE POLYETHERCARBOXYLATES

(30) Priorität: 10.02.1999 DE 19905488
(43) Veröffentlichungstag der Anmeldung: 21.11.2001
(73) Patentinhaber: Degussa Construction Chemicals GmbH, 83308 Trostberg (DE)
(72) Erfinder: ALBRECHT, Gerhard, D-83342 Tacherting (DE); LEITNER, Hubert, A-8967 Haus/Ennstal (AT); KERN, Alfred, D-84558 Kirchweidach (DE); WEICHMANN, Josef, D-84568 Pleiskirchen (DE)
(74) Vertreter: Böhm, Brigitte, Dipl.-Chem. Dr.
(86) Internationale Anmeldenummer: EP0000999
(87) Internationale Veröffentlichungsnummer: WO0047533

(56) Entgegenhaltungen:
- DATABASE WPI Section Ch, Week 199817 Derwent Publications Ltd., London, GB; Class A93, AN 1998-189048 XP002141409 & JP 10 045451 A (NIPPON OILS & FATS CO LTD), 17. Februar 1998 (1998-02-17)
- PATENT ABSTRACTS OF JAPAN vol. 1999, no. 08, 30. Juni 1999 (1999-06-30) & JP 11 079802 A (UBE IND LTD), 23. März 1999 (1999-03-23)
- PATENT ABSTRACTS OF JAPAN vol. 1998, no. 13, 30. November 1998 (1998-11-30) & JP 10 226550 A (NOF CORP), 25. August 1998 (1998-08-25)

## Beschreibung

Die vorliegende Erfindung betrifft pulverförmige Polymerzusammensetzungen auf der Basis von Polyethercarboxylaten, Verfahren zu ihrer Herstellung und deren Verwendung.

Wasserlösliche Polymere bestehend aus polyoxyalkylenhaltigen Strukturbausteinen, Carbonsäure- und/oder Carbonsäureanhydrid-Monomeren sowie gegebenenfalls weiteren Monomeren - im weiteren als Polyethercarboxylate bezeichnet - haben in der letzten Zeit Zugang zu einer Reihe von Anwendungen gefunden.

Neben ihrem Einsatz als Dispersionsstabilisator bei der Herstellung wasserlöslicher Copolymere (WO 97 /30 094) wird ihre Verwendung als Schutzkolloid bei der Bereitung verbackungsresistenter Dispersionspulver beschrieben. Vorzugsweise werden Polyethercarboxylate allerdings in Baustoffen, wie Beton, Mörteln, Bitumen, Spachtelmassen, Klebern, pigmenthaltigen Anstrich- und Beschichtungszubereitungen, in keramischen Massen, in der Feuerfestindustrie und Erdölverarbeitung verwendet, um die rheologischen und/oder die Benetzungseigenschaften dieser Baustoffe gezielt zu beeinflussen. Durch adsorptive Wechselwirkungen, welche Polyethercarboxylate mit den hydraulischen Bindemittelteilchen dieser Baustoffe (Zement, Kalk, Calciumsulfat, etc.) eingehen können, kommt es zu einer Stabilisierung der mineralischen Partikel verbunden mit einer verringerten inneren Reibung und damit zu einer verbesserten Fließ- und Verarbeitungsfähigkeit. Obwohl diese Polymere nur aus zwei wesentlichen Struktureinheiten bestehen, nämlich einem polyoxyalkylenhaltigen Baustein sowie einem Carbonsäure(-anhydrid)-Monomer, kann die Art der Verknüpfung sehr vielfältig sein. Die strukturelle Variationsbreite derartiger Polyethercarboxylate reicht von statistischen, alternierenden, blockweise aufgebauten bis hin zu Kammpolymeren mit Carboxylgruppen in der Haupt- und Polyethereinheiten in der Seitenkette. Weiterhin sind Pfropfcopolymere eingeschlossen, die durch Funktionalisierung von Polyethern mit Carbonsäuregruppen-haltigen Monomeren entstehen.

Und schließlich können auch Polyester, die durch Umsetzung von Polyethern, wie Polyethylenglykol mit mehrwertigen Carbonsäuren bzw. Carbonsäureanhydriden gebildet werden, der Gruppe der Polyethercarboxylate zugeordnet werden, wobei es unerheblich ist, ob diese Polymere als freie Säure oder in ihrer Salzform vorliegen.

Der technische Vorteil derartiger Produkte als Fließmittel in zementären Baustoffen liegt zum einen in der Möglichkeit, mit äußerst geringen Einsatzmengen eine langanhaltende Verarbeitbarkeit zu erreichen, wie sie die Transportbetonindustrie wünscht. Zum anderen kann mit diesen Additiven der Wasseranteil so stark reduziert werden, daß hochfeste, bereits nach 12 h entschalbare Betone herstellbar sind, wodurch eine zentrale Forderung des Bereiches "Fertigteilindustrie" erfüllt werden kann. Hinzu kommt, daß die Polymere frei von toxikologisch bedenklichen Bestandteilen, wie Formaldehyd sind, was sie von herkömmlichen Zementfließmitteln, z. B. nach EP-PS 214 412 oder DE-PS 16 71 017 unterscheidet. Für eine Reihe von Anwendungen ist es sinnvoll und wünschenswert, die wasserlöslichen Polyethercarboxylate in Form ihrer wäßrigen Lösungen bereitzustellen.

Die Verwendung wäßriger Zubereitungen kann allerdings in anderen Anwendungsbereichen, wo die Polymere als Additiv in werkseitig vorgefertigten Trockenmischungen benötigt werden, vollkommen ausgeschlossen sein.

Neben logistischen und ökonomischen Vorteilen (Transport von Wasser!) haben Pulver gegenüber wäßrigen Zubereitungen auch eine Reihe technischer Vorzüge. Die Stabilisierung vor dem Befall mit Mikroorganismen durch Zugabe von Bioziden entfällt ebenso wie die u. U. aufwendigen Maßnahmen zur Tankhygiene. Da Polyethercarboxylate aufgrund ihrer oberflächenaktiven Eigenschaften unerwünscht hohe Anteile von Luft in den Baustoff einführen können, werden den wäßrigen Zubereitungen in der Regel bereits nach der Herstellung Entschäumer zugemischt.

Aufgrund der Unverträglichkeit des Entschäumers im wäßrigen Medium des Polyethercarboxylates kommt es zu Absetz- und/oder Aufschwimmerscheinungen, was beim Endanwender zu erheblichen Problemen führt.

Sind die Polyetherbausteine in den Polyethercarboxylaten in der Hauptkette oder als Seitenkettenbestandteil an der Hauptkette über Estergruppen angebunden, kann es bereits während der Lagerung der wäßrigen Zubereitungen zu einer unerwünschten Hydrolyse unter Zerstörung der Polymerstruktur kommen.

Diesem Problem kann nur "symptomatisch" durch Lagerung bei niedrigen Temperaturen begegnet werden, was die Anwendung derartiger wäßriger Zubereitungen besonders in warmen Klimazonen sehr stark einschränkt. Zu der mangelnden Stabilität bei Temperaturen über 30 °C kommt die Empfindlichkeit gegenüber Frosteinwirkung. Aufgrund der genannten Tatsachen hat sich der Einsatz von Pulvern gegenüber wäßrigen Zubereitungen immer bewährt.

Entsprechend dem Stand der Technik werden Polymerpulver auf Polyethercarboxylatbasis durch Versprühen der wäßrigen Zubereitungen in einem Heißluftstrom (Sprühtrocknung) gewonnen, wobei vorteilhafterweise Antioxidantien sowie Sprühhilfsmittel zugesetzt werden müssen, um
a) die Selbsterwärmung bzw. Selbstentzündung derartiger Polymere während und nach dem Trocknungsprozess zu verhindern
b) ein Verkleben der wachsartigen Polymerteilchen im Trockner einzudämmen.

Eine Vernachlässigung der unter a) genannten Sicherheitsrisiken hat bereits zu Bränden während des Sprühtrocknungsprozesses geführt. Weiterhin gestaltet es sich trotz des Einsatzes von Sprühhilfsmitteln teilweise schwierig, ein klebfreies und verbackungsresistentes Polymerpulver zu isolieren, vor allem dann, wenn der Polyetheranteil im Polymer hoch und der Carboxylanteil niedrig ist. Diese Nachteile, der hohe Energiebedarf der Sprühtrocknung und die bei der Sprühtrocknung einzuhaltenden Emissionsgrenzwerte sind besonders gravierend.

Besonders unwirtschaftlich ist die Vorgehensweise, nach der das Polyethercarboxylat zunächst in einer lösemittelfreien Polymerisation erzeugt, mit Wasser verdünnt und anschließend neutralisiert wird. Danach erfolgt die Sprühtrocknung mit den o. g. Nachteilen, wobei das im Verdünnungsprozess zugeführte Wasser wieder entfernt werden muss.

Der vorliegenden Erfindung lag daher die Aufgabe zugrunde, pulverförmige Polymerzusammensetzungen auf der Basis von Polyethercarboxylaten bereitzustellen, welche die Nachteile des Standes der Technik vermeiden, d.h. bei hohen Temperaturen lagerstabile sowie andererseits frostunempfindliche Produkte liefern, die keine Konservierungszusätze benötigen, stabil sind gegenüber Selbstentzündung und thermooxidativen Zerfall, verklebungs- und verbackungsresistente Pulver liefern und mit einem geringen Energieverbrauch und nach einem rationellen Verfahren zugänglich sind.

Diese Aufgabe wurde erfindungsgemäß dadurch gelöst, daß sie
a) 5 bis 95 Gew.-% eines wasserlöslichen Polymers, das aus polyoxyalkylenhaltigen Strukturbausteinen, Carbonsäure- und/oder Carbonsäureanhydrid-Monomeren sowie ggf. weiteren Monomeren aufgebaut ist, und
b) 5 bis 95 Gew.-% eines feinteiligen mineralischen Trägermaterials mit einer spezifischen Oberfläche von 0,5 bis 500 m²/g (nach BET gemäß DIN 66 131) enthalten.

Überraschenderweise wurde gefunden, daß die Einarbeitung der Polyethercarboxylate (Komponente a) in die mineralische Komponente b) so effektiv gestaltet werden kann, daß bis zu 90 Gew.-% Wirkstoff, d. h. Polyethercarboxylatanteil in der Polymerzusammensetzung erzielt werden können.

Besonders überraschend war außerdem die Tatsache, daß die Verklebungsund Verbackungsresistenz gegenüber sprühgetrockneten Produkten deutlich erhöht war sowie zusätzliche Vorteile bei der Anwendung der Zusammensetzungen in zementhaltigen Baustoffmischungen gefunden wurden.

Die zur Herstellung der erfindungsgemäßen Polymerzusammensetzung verwendeten wasserlöslichen Polymere sind Produkte, die in der Haupt- oder in der Seitenkette Polyoxyalkylengruppen, vorzugsweise Polyethylenbzw. Polypropylenglykol-Gruppen enthalten und darüber hinaus aus Carbonsäure- und/oder Carbonsäureanhydrid-Monomeren wie vorzugsweise Acrylsäure, Methacrylsäure, Maleinsäure, Maleinsäureanhydrid, Fumarsäure, Itaconsäure und Itaconsäureanhydrid aufgebaut sind. Zusätzlich können weitere Monomere auf Vinyl- oder Acrylatbasis zum Aufbau der Polyethercarboxylate beitragen, wie Styrol, α-Methylstyrol, Isobuten, Diisobuten, Cyclopentadien, Ethylen, Propylen, Isopren, Butadien, Acrylnitril, Chloropren, Vinylacetat, N-Vinylpyrrolidon, Methylacrylat, Methylmethacrylat, n-Butylacrylat, 2-Ethylhexylacrylat, Acrylamid, Methacrylamid, Acrylamidomethylpropansulfonsäure, Styrolsulfonsäure, Vinylchlorid, Methylvinylether, Ethylvinylether, Allylalkohol, Allylsulfonsäure, Allylchlorid und andere.

Die Polymere können linear, kurzkettenverzweigt, langkettenverzweigt oder vernetzt sein und in Kammform, Sternform, Hantelform und anderen morphologisch denkbaren Strukturen vorliegen.

Beispiele sind Blockcopolymere aus Polymethacrylsäure und Polyethylenglykol, kammartig aufgebaute Polymere aus einer Polymethacrylsäurehauptkette und einzelnen über Estergruppierungen gebundenen Polyethylenoxidseitenketten, mit Methylpolyethylenglykol teilveresterte Maleinsäureanhydrid/Styrol-Copolymere,Allylpolyethylenglykol/Maleinsäure-Copolymere, Vinylpolyethylenglykol/Maleinsäuremonoester-copolymere, Pfropfcopolymere bestehend aus einem Polyethylen- bzw. Polypropylenglykolgrundgerüst und Maleinsäureanhydrid- bzw. Acrylsäureseitenketten, die ihrerseits wiederum verestert bzw. teilverestert sein können.

Auch ionische Gruppen tragende und daher wasserlösliche Polyester, Polyamide und Polyurethane auf der Basis von Alkylenoxiden wie Ethylenoxid, Propylenoxid oder Butylenoxid sind möglich.

Diese Polyethercarboxylate können in Form ihrer freien Säuren oder neutralisiert vorliegen und nach dem Verfahren der Lösungs-, Substanz-, inversen Emulsions- oder Suspensionspolymerisation hergestellt werden.

In bevorzugten Ausführungsformen kommen in Substanz hergestellte Polyethercarboxylate zum Einsatz. Bei diesen ist der erfindungsgemäße Nutzen besonders hoch, da diese dem Stand der Technik gemäß zunächst mit Wasser verdünnt, neutralisiert und anschließend unter Beseitigung des vorher zugeführten Wassers durch Sprühtrocknung in ein Pulver überführt werden.

Es ist als erfindungswesentlich anzusehen, daß die verwendeten feinteiligen mineralischen Trägermaterialien eine spezifische Oberfläche von 0,5 bis 500 m²/g (ermittelt nach BET gemäß DIN 66 131) aufweisen. Die Gewichtsanteile an Trägermaterialien in den pulverförmigen Polymerzusammensetzungen hängen vom Typ, der Zusammensetzung und der Einarbeitungsform des Polymers sowie von der spezifischen Oberfläche und dem Adsorptionsvermögen des mineralischen Trägermaterials ab. Sie können daher in einem sehr breiten Bereich von 5 bis 95 Gew.-% schwanken.

Der Typ dieser Trägermaterialien unterliegt keiner besonderen Beschränkung. Wesentlich ist, daß sich das Material gut mit dem Polyethercarboxylat verträgt, die Wirkung des Polymers nicht negativ beeinflußt und bereits in geringen Mengen pulverförmige verklebungs- und verbackungsresistente Polymerzusammensetzungen ergibt.

Vorzugsweise eingesetzt werden können Kreide, Kieselsäure, Calcit, Dolomit, Quarzmehl, Bentonit, Bimsmehl, Titandioxid, Flugasche, Zement (Portlandzement, Hochofenzement, etc.) Aluminiumsilikat, Talkum, Anhydrit, Kalk, Glimmer, Kieselgur, Gips, Magnesit, Tonerde, Kaolin, Schieferund Gesteinsmehl, Bariumsulfat sowie Gemische aus diesen Materialien. Gemäß einer bevorzugten Ausführungsform umfaßt das mineralische Trägermaterial bereits eine oder mehrere mineralische Komponenten eines Baustoffs.

Die feinteiligen Trägermaterialien besitzen eine bevorzugte Teilchengröße von 0,1 bis 1000 µm.

Gegebenenfalls können die mineralischen Trägermaterialien in Kombination mit organischen (nicht-mineralischen) Zusätzen wie Cellulosepulvern bzw.-fasern sowie Pulvern bzw. Fasern organischer Polymere (Polyacrylnitril, Polystyrol, etc.) verwendet werden.

Gegenstand der Erfindung ist auch ein Verfahren zur Herstellung der pulverförmigen Polymerzusammensetzungen, das dadurch gekennzeichnet ist, dass das Polyethercarboxylat unmittelbar nach dem Polymerisations-Herstellungsprozeß in das jeweilige mineralische Trägermaterial eingearbeitet wird. Vorzugsweise wird das Polymer in das vorgelegte ggf. vorgewärmte mineralische Trägermaterial in so fein verteilter Form wie möglich eingebracht, wobei das Polyethercarboxylat ein Substanzpolymer darstellt oder in Form einer wäßrigen Lösung, einer inversen Emulsion oder Suspension vorliegen kann.

Gemäß einer bevorzugten Ausführungsform wird ein durch Substanzpolymerisation bei 110 bis 140 °C hergestelltes Polyethercarboxylat im Temperaturbereich von 70 bis 120 °C auf ein vorgewärmtes mineralisches Trägermaterial (bspw. vom Typ einer Kieselsäure) in einem Mischer aufgesprüht.

Eine besonders effektive Einarbeitung, die verbunden ist mit einem sehr geringen Verbrauch an mineralischem Trägermaterial, kann durch Vernebelung des Polyethercarboxylates auf das vorgewärmte Trägermaterial erreicht werden. Die Effektivität sinkt, wenn das Polymer auf das Trägermaterial versprüht, getropft bzw. geschüttet wird, weil in der angegebenen Reihenfolge die Oberfläche der einzuarbeitenden Substanz kleiner wird.

Von besonderem Interesse ist weiterhin die Mischtechnik bei der Einarbeitung, die sich sehr stark am Typ des verwendeten Trägermaterials orientiert.

Trägermaterialien mit einer ausgeprägten porösen Struktur, wie z. B. Kieselsäuren, weisen ein besonders hohes Adsorptionsvermögen auf.

Mischer, an deren Mischwerkzeugen hohe Scherkräfte wirksam werden, können die poröse Struktur zerstören, wodurch die in den Hohlräumen festgehaltenen Polyethercarboxylate wieder herausgepreßt werden. Es empfiehlt sich daher, für diesen Trägertyp Mischapparate mit geringen Scherkräften, wie Trommelmischer, V-Mischer, Taumelmischer oder andere Vertreter aus der Gruppe der Freifallmischer zu verwenden.

Darüber hinaus sind für poröse Träger Konusmischer, Pflugscharmischer oder Spiralmischer mit vertikal oder horizontal angeordneten Mischwerkzeugen geeignet. Für mineralische Träger, deren Struktur durch den Mischprozess nicht gestört werden kann, sind auch alle anderen Apparatetypen nutzbar, wie Dissolver, Schneckenmischer, Doppelschneckenmischer, Air-Mix-Mischer und andere.

Es ist schließlich im Rahmen der vorliegenden Erfindung noch möglich, einen Trocknungsprozess nach der Einarbeitung des Polyethercarboxylates in den Träger anzuschließen, um die Ergiebigkeit des Trägermaterials zu steigern.

Ein weiterer Gegenstand der Erfindung ist die Verwendung von mindestens einer pulverförmigen Polymerzusammensetzung gemäß vorliegender Erfindung in Baustoffen, wobei als Baustoffe Bitumenprodukte wie Asphalt, bituminöse Klebe-, Dichtungs-, Spachtel- und Anstrich- bzw. Beschichtungsmassen (Parkdeck), oder auf hydraulisch abbindenden Bindemitteln wie Zement bzw. latent hydraulischen Bindemitteln wie Flugasche und Trass basierende Produkte wie Mörtel (Vergußmörtel), Estriche, Beton, Putze, Klebe-, Dichtungs- und Spachtelmassen sowie Anstriche in Frage kommen. Als weitere Gruppe kommen die gipsbasierenden Baustoffe (Mörtel, Putz, Estrich), die anhydritbasierenden Baustoffe, die sonstigen calciumsulfatbasierenden Baustoffe, die Gruppe der keramischen Massen, der Feuerfestmassen und der Ölfeldbaustoffe in Betracht. Schließlich können die erfindungsgemäßen Polymerzusammensetzungen auch in dispersionsbasierenden Baustoffen wie Dispersionsfliesenklebern, elastischen Dichtschlämmen, Grundierungen, Mörtelhaftzusätzen sowie pulverförmigen Innen- und Außenwandfarben eingesetzt werden.

Die erfindungsgemäßen pulverförmigen Polymerzusammensetzungen können auch in Kombination o. g. Baustoffgrupppen verwendet werden, z. B. in bitumenhaltigen zementären Fließestrichen, Vergußmörteln, etc.

Die Einarbeitung der pulverförmigen Polyethercarboxylate in den Baustoff erfolgt in der Regel zusammen mit anderen Füllstoffen und Baustoffadditiven wie Dispersionspulvern, Wasserretentionsmitteln, Verdickern, Verzögerern, Beschleunigern, Netzmitteln u. a. Der Anteil an Polyethercarboxylat liegt üblicherweise bei 0,1 bis 5 Gew.-% bezogen auf das Gewicht des Baustoffs. Die erfindungsgemäßen pulverförmigen Polymerzusammensetzungen weisen eine Reihe von Vorteilen gegenüber auf herkömmliche Weise gewonnenen Polyethercarboxylaten in Pulverform auf. Dies soll anhand der nachfolgenden Beispiele näher erläutert werden.

### Beispiele

### Beispiel 1

In einem Taumelmischer der Fa. Bachofen AG, Basel wird durch Mischen über einen Zeitraum von 75 min eine pulverförmige Polymerzusammensetzung bestehend aus 75 g einer auf 80 °C vorgewärmten Fällungskieselsäure mit einer spezifischen Oberfläche von 190 m²/g und 425 g eines aufgeschmolzenen Polyethercarboxylates (A) bei 80 °C hergestellt.

Das Polyethercarboxylat (A) wurde durch eine lösemittelfreie Polymerisation wie folgt hergestellt:
50,1 g Maleinsäureanhydrid (0,51 Mol) werden mit 294 g Methylpolyethylenglykol-1150 (0,256 Mol) bei einer Temperatur von 120 °C über einen Zeitraum von 3 h unter sorgfältigem Ausschluß von Luftsauerstoff verestert. Zu dem auf diese Weise erhaltenem Vorlagegemisch wurden aus separaten Zuläufen bei 110 °C einerseits 72,8 g Styrol (0,7 Mol), welches eine geringe Menge von n-Dodecylmercaptan enthält, über einen Zeitraum von 90 min und andererseits 8,3 g Azobisisobutyronitril gelöst in 50 ml Aceton über einen Zeitraum von 120 min hinzugefahren. Es wurde permanent mit Stickstoff gespült, so dass bereits während der Zulaufphase ein Großteil des Acetons ausgetrieben werden konnte. In einer 2stündigen Nachreaktion bei 120 °C wurde das restliche Aceton entfernt, wobei ein hellgelbes Substanzpolymer aus Maleinsäureanhydrid, Styrol und Methylpolyethylenglykol-1150-monomaleinat im Molverhältnis 0,5 : 1,37 : 0,5 erhalten wurde (Polyethercarboxylat A). Nach Zusatz von 0,5 Gew.-% eines Antioxidationsmittels und Aufsprühen auf das eingangs erwähnte mineralische Trägermaterial sowie Mischen über 75 min wurde ein verklebungs- und verbackungsresistentes, rieselfähiges, elfenbeinfarbenes Pulver erhalten mit einem Wirkstoffgehalt an Polyethercarboxylat von 85 Gewichtsprozent (mittlerer Teilchendurchmesser 39 µm).

### Vergleichsbeispiel 1

Dem Stand der Technik gemäß wurde das im Beispiel 1 synthetisierte Substanzpolymer auf 80 °C abgekühlt und in 425 g Wasser eingerührt. Nach Abkühlen der erhaltenen wäßrigen Lösung wurde durch langsame Zugabe von verdünnter Natronlauge ein pH-Wert von 8,5 eingestellt. Es wurden 0,5 Gew.-% bezogen auf den Polymergehalt eines Antioxidationsmittels eingerührt, und in einem Laborsprühtrockner der Fa. NIRO wurde die aus Viskositätsgründen weiter mit Wasser auf 30 Gew.-% verdünnte Polymerlösung in ein Pulver überführt. Es wurde ein leicht braun gefärbtes Pulver mit einem mittleren Teilchendurchmesser von 54 mm erhalten, das sehr stark zum Verklumpen neigte.

Die in den Beispielen erhaltenen Pulver wurden hinsichtlich folgender Daten charakterisiert:
1. Polymergehalt (GPC)
2. Fließverhalten der Pulver (Auslaufgefäß)
3. Verbackungsresistenz der Pulver (2 kg-Druckbelastung)
4. Fließmittelwirkung in einer zementären Baustoffmischung

### Beispiel 2 bis 9

Es wurde verfahren, wie unter Beispiel 1 beschrieben, jedoch wurden folgende feinteilige mineralische Trägermaterialien anstelle der dort verwendeten Kieselsäure eingesetzt (Tabelle 1):

**Tabelle 1:**

| Beispiel | Träger | | Gewichtsanteile |
|---|---|---|---|
| | Typ | spez. Oberfläche (m²/g) | Polymer / Träger (%) |
| 2 | Kreide | 11 | 40 : 70 |
| 3 | Dolomit (mikronisiert) | 4 | 45 : 55 |
| 4 | Kieselgur | 65 | 55 : 45 |
| 5 | Calciumsilikat | 35 | 70 : 30 |
| 6 | Aluminiumsilikat | 100 | 50 : 50 |
| 7 | Natriumaluminiumsilikat | 80 | 65 : 35 |
| 8 | Fällungskieselsäure | 450 | 80 : 20 |
| 9 | Fällungskieselsäure/ | 450 | 75 : 25 |
| | Kreide (1 : 1) | 11 | |

### Beispiel 10 bis 15:

Anstelle des im Beispiel 1 eingesetzten, durch lösemittelfreie Copolymerisation gewonnenen Polyethercarboxylates wurden folgende Polymere eingesetzt (Tabelle 2):

**Tabelle 2:**

| Beispiel | Polyethercarboxylat²⁾ | Synthesetyp | Gewichtsverhältnis Polymer/Träger¹⁾ (%) |
|---|---|---|---|
| 10 | B | Substanzpolymerisation | 87 : 13 |
| 11 | C | Substanzpolymerisation | 90 : 10 |
| 12 | D | Substanzpolymerisation | 81 : 19 |
| 13 | E | Substanzpolymerisation | 80 : 20 |
| 14 | F | Substanzpolymerisation (Pfropfpolymerisation) | 75 : 25 |
| 15 | G | wäßrige Lösungspolymeration | 67 : 33 |

| | | | |
|---|---|---|---|
| ¹⁾ Träger: Fällungskieselsäure (spezifische Oberfläche : 190 m²/g) | | | |
| ²⁾ Polymerzusammensetzungen: B Maleinsäureanhydrid / Styrol / Methylpolyethylenglykol - 2000 - monomaleinat - Copolymer (0,60 : 1,37 : 0,40 Molverhältnis) C Maleinsäureanhydrid / Styrol / Methylpolyethylenglykol - 5000 - monomaleinat - Copolymer (0,73 : 1,37 : 0,27 Molverhältnis) D Maleinsäureanhydrid / Allylpolyethylenglykol - 1100 - monoethylether-Copolymer (1,15 : 1 Molverhältnis) E Maleinsäureanhydrid / Vinylpolyethylenglykol - 500 - monomethylether-Copolymer (1,10 : 1 Molverhältnis) F zu 50 Mol.-% teilverestertes Pfropfcopolymer aus Methylpolyethylenglykol - 500 und Maleinsäureanhydrid (1 : 1,6 Molverhältnis) G Maleinsäure/Ethylenglykolmonovinylether/Methylpolyethylenglykol - 2000 - monoethylether - Copolymer (0,40 : 0,85 : 0,37 Molverhältnis, Feststoffgehalt: 45 %, Natriumsalz, pH 6,5) | | | |

### Vergleichsbeispiele 2 bis 7:

Die in den Beispielen 10 bis 15 aufgeführten Polyethercarboxylate B bis G wurden nach der im Vergleichsbeispiel 1 angegebenen Verfahrensweise verdünnt, neutralisiert, mit Antioxidationsmittel versehen und mittels Sprühtrocknung in Pulver überführt.

Die aus den Erfindungsbeispielen 1 bis 15 und den Vergleichsbeispielen 1 bis 7 erhaltenen Testergebnisse sind in den folgenden Anwendungsbeispielen zusammenfaßt.

### Anwendungsbeispiel 1

### Polymergehalt der pulverförmigen Polymerzusammensetzungen in den erfindungsgemäßen und Vergleichsbeispielen

Der Polymergehalt wurde durch Gelpermeationschromatographie ermittelt (Bedingungen: Waters (Milford, MA); Shodex OH Pak KB-804 und KB-802,5; Standard: Polyethylenglykol; Eluent: NH₄ COO/CH₃CN 80 : 20 v/v).

Es hat sich gezeigt, dass die direkte Überführung der Polymere gemäß der Beispiele 1 bis 15 in Pulver nicht mit einer Verminderung des wirksamen Polymeranteils verbunden ist. Demgegenüber ist bei Polymeren, die Esterbindungen enthalten und nach dem Stand der Technik gemäßen Verfahren in Pulver überführt werden, der Polymergehalt nach der Sprühtrocknung signifikant reduziert. Dies ist darauf zurückzuführen, dass ein Teil der über Estergruppen angebundenen Polyetherbestandteile der als Kamm- oder Pfropfcopolymere vorliegenden Polyethercarboxylate im Verdünnungs-, Neutralisations- und Sprühtrocknungsprozess abgespalten werden.

**Tabelle 3**

| Beispiel | Polyethercarboxylat¹⁾ | Polymergehalt²⁾ (Gew.-%) | |
|---|---|---|---|
| | | nach der Polymerisation | im Pulver |
| Beispiel 1 | A | 89,7 | 89,6 |
| Beispiel 2 | A | 88,9 | 88,7 |
| Beispiel 6 | A | 87,4 | 87,6 |
| Beispiel 8 | A | 86,6 | 86,7 |
| Beispiel 9 | A | 88,0 | 88,0 |
| Vergleich 1 | A | 89,2 | 79,4 |
| Beispiel 10 | B | 82,2 | 83,0 |
| Vergleich 2 | B | 81,7 | 73,6 |
| Beispiel 11 | C | 79,5 | 79,5 |
| Vergleich 3 | C | 79,2 | 70,0 |
| Beispiel 14 | F | 90,4 | 90,3 |
| Vergleich 6 | F | 90,3 | 83,8 |

| | | | |
|---|---|---|---|
| ¹⁾ Polymerzusammensetzung vgl. Bsp. 1 und Tabelle 2 | | | |
| ²⁾ GPC | | | |

### Anwendungsbeispiel 2

### Fließverhalten und Rieselfähigkeit erfindungsgemäßer Polymerzusammensetzungen und von Vergleichspolymeren

Die Fließfähigkeit (ohne Druckbehandlung) wurde nach K. Klein: Seifen, Öle, Fette, Wachse 94 (1968), Seite 12 für verschiedene Polymerzusammensetzungen bestimmt. Hierzu wurden siliconisierte Glasauslaufgefäße mit unterschiedlichen Auslaufdurchmessern bis zum Rand mit der Prüfsubstanz gefüllt. Die Bewertung erfolgte mit den Noten 1, d. h. das Pulver fließt ohne zu stocken aus dem Fließgefäß mit der kleinsten Auslauföffnung (ø 2,5 mm), bis zur Note 6, d. h. das Pulver fließt auch aus dem Meßgefäß mit der größten Öffnung nicht mehr aus (ø 18 mm). Begonnen wurden die Messungen für jedes Pulver mit dem Meßgefäß mit der größten Auslauföffnung.

**Tabelle 4:**

| "Fließ- und Rielselfähigkeit" | | |
|---|---|---|
| Beispiel | Polyethercarboxylat¹⁾ | Bewertungsziffer "Fließ- und Rieselfähigkeit" |
| Beispiel 1 | A | "sehr gut" (1) |
| Beispiel 2 | A | "gut - befriedigend" (2 - 3) |
| Beispiel 3 | A | "befriedigend" (3) |
| Beispiel 4 | A | "gut" (2) |
| Beispiel 5 | A | "gut" (2) |
| Beispiel 6 | A | "gut" (2) |
| Beispiel 7 | A | "sehr gut" (1) |
| Beispiel 8 | A | "sehr gut" (1) |
| Beispiel 9 | A | "gut" (2) |
| Vergleich 1 | A | "ungenügend" (6) |
| Beispiel 10 | B | "sehr gut" (1) |
| Vergleich 2 | B | "mangelhaft" (5) |
| Beispiel 11 | C | "sehr gut" (1) |
| Vergleich 3 | C | "ausreichend" (4) |
| Beispiel 12 | D | "gut" (2) |
| Vergleich 4 | D | "ungenügend" (6) |
| Beispiel 13 | E | "befriedigend" (3) |
| Vergleich 5 | E | "ungenügend" (6) |
| Beispiel 14 | F | "gut" (2) |
| Vergleich 6 | F | "ausreichend" (4) |
| Beispiel 15 | G | "befriedigend" (3) |
| Vergleich 7 | G | "ausreichend" (4) |

| | | |
|---|---|---|
| ¹⁾ Polymerzusammensetzung vgl. Bsp. 1 und Tabelle 2 | | |

### Anwendungsbeispiel 3

### Verbackungsresistenz von erfindungsgemäßen Polymerzusammensetzungen und Vergleichspolymeren

Pulverförmige Produkte neigen bei Stapelung in Säcken oder im Silo zum Zusammenbacken. Zur Beurteilung der Verbackungsresistenz oder Stapelfähigkeit wurde das zu prüfende Pulver in einen Stahlzylinder von 50 mm Innendurchmesser ca. 20 mm hoch eingefüllt und mit einem Druckstempel von 1,2 kg Gewicht und einem Auflagegewicht von 2 kg belastet.

Der bei dieser Prüfanordnung vorliegende Druck beträgt 0,17 kg/cm², was dem Druck von 10 bis 12 aufeinanderliegenden Säcken mit 50 kg Füllgewicht entspricht. Nach 24 h Belastung wird das Auflagegewicht entfernt und die "Pulvertablette" aus der Hülse gedrückt. Die Härte der Pulvertablette wird nach folgendem Beurteilungsschema als Kriterium für die Verbackungsresistenz angesehen.

**Tabelle 5**

| Beurteilung | Note | Verhaltensmerkmal |
|---|---|---|
| sehr gut | 1 | völlig unverändert |
| gut | 2 | lose haftend, in Originalzustand zerfallend |
| befriedigend | 3 | locker geformt, bei leichtem Fingerdruck pulverig zerfallend |
| ausreichend | 4 | locker verbacken, gerade noch zerfallend |
| mangelhaft | 5 | halbfest verbacken, nicht mehr zerfallend |
| ungenügend | 6 | fest geformt |

Folgende Ergebnisse wurden erhalten:

**Tabelle 6**

| Beispiel | Polyethercarboxylat¹⁾ | Bewertungsziffer "Verbackungsresistenz" |
|---|---|---|
| 1 | A | "gut" (2) |
| Vergleich 1 | A | "ausreichend" (4) |
| 10 | B | "gut" (2) |
| Vergleich 2 | B | "mangelhaft" (5) |
| 11 | C | "gut" (2) |
| Vergleich 3 | C | "befriedigend" (3) |
| 12 | D | "gut" (2) |
| Vergleich 4 | D | "ausreichend" (4) |
| 13 | F | "gut" (2) |
| Vergleich 5 | F | "ausreichend" (4) |
| 15 | G | "gut" (2) |
| Vergleich 7 | G | "befriedigend" (3) |

| | | |
|---|---|---|
| ¹⁾ Polymerzusammensetzung vgl. Bsp. 1 und Tabelle 2 | | |

### Anwendungsbeispiel 4

### Fließmittelwirkung in einem zementhaltigen Baustoff

Die erfindungsgemäßen sowie die aus den Vergleichsbeispielen erhaltenen Pulver wurden in einer Mörtelformulierung auf ihre anwendungstechnischen Eigenschaften hin untersucht. Hierzu wurden die pulverförmigen Polymerzusammensetzungen mit den gemäß DIN 1164 Teil 7 vorgeschriebenen Anteilen an Sand und Portlandzement (CEM I 42,5 R Kiefersfelden) trocken vermischt. Anschließend erfolgte die Zugabe von Wasser und ein normgerechtes Anmischen der Bestandteile. Sofort sowie nach 15, 30, 45 und 60 Minuten wurde das Ausbreitmaß der Frischmörtel für jeden Pulvertyp ermittelt.

**Tabelle 7**

| Beispiel | Polymerdosierung¹⁾ | Polyethercarboxylat²⁾ | Ausbreitmaß (cm) | | | | |
|---|---|---|---|---|---|---|---|
| | | | sofort | 15 min | 30 min | 45 min | 60 min |
| 1 | 0,15 | A | 23,5 | 22,5 | 20,1 | 19,0 | 18,3 |
| Vergleich 1 | 0,15 | A | 22,9 | 19,6 | 17,4 | 16,3 | 15,4 |
| 10 | 0,15 | B | 25,0 | 24,1 | 22,1 | 19,3 | 17,2 |
| Vergleich 2 | 0,15 | B | 24,3 | 22,0 | 19,4 | 17,0 | 14,0 |
| 11 | 0,20 | C | 26,1 | 23,6 | 21,1 | 19,9 | 18,4 |
| Vergleich 3 | 0,20 | C | 25,4 | 21,6 | 19,9 | 17,3 | 14,6 |
| 15 | 0,15 | G | 27,9 | 26,1 | 24,9 | 23,9 | 23,0 |
| Vergleich 7 | 0,15 | G | 26,0 | 24,0 | 21,4 | 20,0 | 17,3 |

| | | | | | | | |
|---|---|---|---|---|---|---|---|
| ¹⁾ Angabe in Gew.-% Polyethercarboxylat bezogen auf das Zementgewicht | | | | | | | |
| ²⁾ Polymerzusammensetzung vgl. Bsp. 1 und Tabelle 2 W/Z = 0,45 CEM I 42,5 R Kiefersfelden 1 Gew.-% Tributylphosphat bzgl. Polymer | | | | | | | |

Bedingt durch den Verlust an Polyetherseitenketten verlieren Mörtelmischungen, die gemäß dem Stand der Technik hergestellte Polymerpulver enthalten, deutlich schneller an Verarbeitbarkeit als Mischungen mit erfindungsgemäßen pulverförmigen Polymerzusammensetzungen. Dies ist auf die verminderte sterische Stabilisierung der Zementteilchen zurückzuführen.

## Patentansprüche

1. Pulverförmige Polymerzusammensetzungen auf der Basis von Polyethercarboxylaten, welche
a) 5 bis 95 Gew.-% eines wasserlöslichen Polymers, das aus polyoxyalkylenhaltigen Strukturbausteinen und Carbonsäureund/oder Carbonsäureanhydrid-Monomeren sowie ggf. weiteren Monomeren aufgebaut ist, und
b) 5 bis 95 Gew.-% eines feinteiligen mineralischen Trägermaterials mit einer spezifischen Oberfläche von 0,5 bis 500 m²/g (nach BET gemäß DIN 66 131) enthalten.
und erhältlich sind durch
durch Aufsprühen des aufgeschmolzenen Polyethercarboxylats auf ein mineralisches Trägermaterial bei 70 bis 120 °C.

2. Polymerzusammensetzung nach Anspruch 1, **dadurch gekennzeichnet, daß** das wasserlösliche Polymer Polyethyien- bzw. Polypropylenglykolgruppen in der Haupt- oder in der Seitenkette enthält.

3. Polymerzusammensetzung nach Anspruch 1 oder 2, **dadurch gekennzeichnet, daß** die Carbonsäure- und/oder Carbonsäureanhydrid-Monomere aus Acrylsäure, Methacrylsäure, Maleinsäure, Maleinsäureanhydrid, Fumarsäure, Itaconsäure und Itaconsäureanhydrid bestehen.

4. Polymerzusammensetzung nach einem der Ansprüche 1 bis 3, **dadurch gekennzeichnet, daß** das wasserlösliche Polymer noch aus weiteren Monomeren auf Vinyl- oder Acrylatbasis aufgebaut ist.

5. Polymerzusammensetzung nach einem der Ansprüche 1 bis 4, **dadurch gekennzeichnet, daß** das Trägermaterial ausgewählt ist aus der Gruppe Kreide, Kieselsäure, Calcit, Dolomit, Quarzmehl, Bentonit, Bimsmehl, Titandioxid, Flugasche, Zement (Portlandzement, Hochofenzement), Aluminiumsilicat, Talkum, Anhydrit, Kalk, Glimmer, Kieselgur, Gips, Magnesit, Tonerde, Kaolin, Schiefer- und Gesteinsmehl, Bariumsulfat sowie Gemische aus diesen Materialien.

6. Polymerzusammensetzung nach einem der Ansprüche 1 bis 5, **dadurch gekennzeichnet, daß** die mineralischen Trägermaterialien in Kombination mit organischen Zusätzen wie Cellulosepulvern bzw. -fasern sowie Pulvern bzw. Fasern organischer Polymere verwendet werden.

7. Polymerzusammensetzung nach einem der Ansprüche 1 bis 6, **dadurch gekennzeichnet, daß** die Trägermaterialien eine Teilchengröße von 0,1 bis 1000 µm aufweisen.

8. Verfahren zur Herstellung von Polymerzusammensetzungen nach einem der Ansprüche 1 bis 7, **dadurch gekennzeichnet, daß** das Polyethercarboxylat unmittelbar nach dem Polymerisations-Herstellungsprozeß in das jeweilige mineralische Trägermaterial eingearbeitet wird.

9. Verfahren nach Anspruch 8, **dadurch gekennzeichnet, daß** man als Polyethercarboxylat ein Substanzpolymer verwendet.

10. Verfahren nach Anspruch 8 oder 9, **dadurch gekennzeichnet, daß** man das aufgeschmolzene Polyethercarboxylat auf ein vorgewärmtes mineralisches Trägermaterial bei 70 bis 120 °C aufsprüht.

11. Verfahren nach Anspruch 8, **dadurch gekennzeichnet, daß** das Polythercarboxylat in Form einer wäßrigen Lösung, einer inversen Emulsion oder Suspension in das mineralische Trägermaterial eingearbeitet wird.

12. Verfahren nach einem der Ansprüche 8 bis 11, **dadurch gekennzeichnet, daß** man bei einem Trägermaterial mit einer porösen Struktur Mischer mit geringen Scherkräften, wie z. B. Freifallmischer, einsetzt.

13. Verwendung der Polymerzusammensetzungen nach einem der Ansprüche 1 bis 7 in Baustoffen, in einer Menge von 0,1 bis 5 Gew.-% an Polyethercarboxylat bezogen auf das Gewicht des Baustoffs.

14. Verwendung nach Anspruch 13, **dadurch gekennzeichnet, daß** man als Baustoffe Bitumenprodukte, auf hydraulisch abbindenden Bindemitteln wie Zement bzw. latent hydraulischen Bindemitteln basierende Baustoffe, Gips-, Anhydrit- oder sonstige Calciumsulfat-basierende Baustoffe, keramische Massen, Feuerfestmassen, Ölfeldbaustoffe und dispersionsbasierende Baustoffe einsetzt.

15. Verwendung nach Anspruch 13 oder 14, **dadurch gekennzeichnet, daß** die pulverförmigen Polymerzusammensetzungen mit anderen Baustoffadditiven und Füllstoffabmischungen kombiniert werden.

16. Verwendung nach Anspruch 15, **dadurch gekennzeichnet, daß** die anderen Baustoffadditive aus Dispersionspulvern, Wasserretentionsmitteln, Verdickern, Verzögerern, Beschleunigern und Netzmitteln ausgewählt sind.

## Claims

1. Pulverulent polymer compositions based on polyether carboxylates, **characterized in that** they comprise
a) from 5 to 95% by weight of a water-soluble polymer made up of polyoxyalkylene-containing structural units, carboxylic acid and/or carboxylic anhydride monomers and, if desired, further monomers, and
b) from 5 to 95% by weight of a fine-particle mineral support material having a specific surface area of from 0.5 to 500 m2/g (determined by the BET method in accordance with DIN 66 131) and obtainable by spraying the molten polyether carboxylate onto a mineral support material at 70 to 120°C.

2. Polymer composition according to claim 1, **characterized in that** the water-soluble polymer contains polyethylene glycol or polypropylene glycol groups in the main chain or in the side chain.

3. Polymer composition according to claim 1 or 2, **characterized in that** the carboxylic acid and/or carboxylic anhydride monomers comprise acrylic acid, methacrylic acid, maleic acid, maleic anhydride, fumaric acid, itaconic acid and itaconic anhydride.

4. Polymer composition according to any of claims 1 to 3, **characterized in that** the water-soluble polymer additionally comprises further monomers based on vinyl or acrylate.

5. Polymer composition according to any of claims 1 to 4, **characterized in that** the support material is selected from the group consisting of chalk, silica, calcite, dolomite, quartz flour, bentonite, ground pumice, titanium dioxide, fly ash, cement (Portland cement, blast furnace 5 cement), aluminum silicate, talc, anhydrite, lime, mica, kieselguhr, gypsum, magnesite, alumina, kaolin, ground slate and other rocks, barium sulfate and mixtures of these materials.

6. Polymer composition according to any of claims 1 to 5, **characterized in that** the mineral support materials are used in combination with organic additives such as cellulose powders or cellulose fibers or powders or fibers of organic polymers.

7. Polymer composition according to any of claims 1 to 6, **characterized in that** the support materials have a particle size of from 0.1 to 1000 pm.

8. Process for preparing polymer compositions according to any of claims 1 to 7, **characterized in that** the polyether carboxylate is incorporated into the respective mineral support material immediately after the polymerization production process.

9. Process according to claim 8, **characterized in that** a bulk polymer is used as polyether carboxylate.

10. Process according to claim 8 or 9, **characterized in that** the molten polyether carboxylate is sprayed onto a preheated mineral support material at from 70 to 120°C.

11. Process according to claim 8, **characterized in that** the polyether carboxylate is incorporated in the form of an aqueous solution, an inverse emulsion or a suspension into the mineral support material.

12. Process according to any of claims 8 to 11, **characterized in that** mixers in which low shear forces occur, e.g. free-fall mixers, are used in the case of a support material having a porous structure.

13. Use of polymer compositions according to any of claims 1 to 7 in building materials in an amount of from 0.1 to 5% by weight of polyether carboxylate based on the weight of the building material.

14. Use according to claim 13, **characterized in that** building materials used are bitumen products, building materials based on hydraulically setting binders such as cement and latent hydraulic binders, building materials based on gypsum, anhydrite or other forms of calcium sulfate, ceramic compositions, refractory compositions, oilfield materials and dispersion-based building materials.

15. Use according to claim 13 or 14, **characterized in that** the pulverulent polymer compositions are combined with other building material additives and filler components.

16. Use according to claim 15, **characterized in that** the other building material additives are selected from among dispersion powders, water retention improvers, thickeners, retardants, accelerators and wetting agents.

## Revendications

1. Compositions de polymère pulvérulentes à base de polyéthercarboxylates, contenant
a) 5 à 95 % en masse d'un polymère soluble dans l'eau constitué d'éléments de structure polyoxyalkyléniques et de monomères acide carboxylique et/ou anhydride d'acide carboxylique et éventuellement d'autres monomères, et
b) 5 à 95 % en masse d'un matériau support inorganique finement divisé ayant une surface spécifique de 0,5 à 500 m²/g (selon BET d'après la norme DIN 66 131),
et pouvant être obtenus par pulvérisation du polyéthercarboxylate fondu sur un matériau support inorganique à une température de 70 à 120°C.

2. Composition de polymère selon la revendication 1, **caractérisée en ce que** le polymère soluble dans l'eau contient dans la chaîne principale ou latérale des groupes polyéthylèneglycol ou polypropylèneglycol.

3. Composition de polymère selon la revendication 1 ou 2, **caractérisée en ce que** les monomères acide carboxylique et/ou anhydride d'acide carboxylique sont constitués d'acide acrylique, d'acide méthacrylique, d'acide maléique, d'anhydride maléique, d'acide fumarique, d'acide itaconique et d'anhydride itaconique.

4. Composition de polymère selon l'une des revendications 1 à 3, **caractérisée en ce que** le polymère soluble dans l'eau est constitué en outre d'autres monomères à base de vinyle ou d'acrylate.

5. Composition de polymère selon l'une des revendications 1 à 4, **caractérisée en ce que** le matériau support est choisi dans le groupe constitué par de la craie, de l'acide silicique, une calcite, une dolomite, de la poudre de quartz, une bentonite, de la pierre ponce en poudre, du dioxyde de titane, des cendres volantes, du ciment (ciment Portland, ciment de haut fourneau), du silicate d'aluminium, du talc, de l'anhydrite, de la chaux, du mica, de la terre d'infusoires, du gypse, de la magnésite, de l'alumine, du kaolin, du schiste et de la roche en poudre, du sulfate de baryum et des mélanges de ces matériaux.

6. Composition de polymère selon l'une des revendications 1 à 5, **caractérisée en ce que** les matériaux supports inorganiques sont utilisés en combinaison avec des additifs organiques comme des poudres ou des fibres de cellulose et des poudres ou des fibres de polymères organiques.

7. Composition de polymère selon l'une des revendications 1 à 6, **caractérisée en ce que** les matériaux supports ont une taille de particules de 0,1 à 1 000 µm.

8. Procédé de préparation de compositions de polymère selon l'une des revendications 1 à 7, **caractérisé en ce que** l'on incorpore le polyéthercarboxylate, tout de suite après le procédé de préparation par polymérisation, dans le matériau support inorganique correspondant.

9. Procédé selon la revendication 8, **caractérisé en ce que** l'on utilise comme polyéthercarboxylate un polymère obtenu par polymérisation en masse.

10. Procédé selon la revendication 8 ou 9, **caractérisé en ce que** l'on pulvérise, à une température de 70 à 120°C, le polyéthercarboxylate fondu sur un matériau support inorganique préalablement chauffé.

11. Procédé selon la revendication 8, **caractérisé en ce que** l'on incorpore le polyéthercarboxylate sous forme d'une solution aqueuse, d'une émulsion inverse ou d'une suspension dans le matériau support inorganique.

12. Procédé selon l'une des revendications 8 à 11, **caractérisé en ce que**, dans le cas d'un matériau support à structure poreuse, on utilise des mélangeurs exerçant de faibles forces de cisaillement comme, par exemple, des malaxeurs à chute libre.

13. Utilisation des compositions de polymère selon l'une des revendications 1 à 7 dans des matériaux de construction, en une quantité de 0,1 à 5 % en masse de polyéthercarboxylate par rapport à la masse du matériau de construction.

14. Utilisation selon la revendication 13, **caractérisée en ce que** l'on utilise comme matériaux de construction des produits bitumineux, des matériaux de construction à base de liants à prise hydraulique comme du ciment ou de liants hydrauliques latents, des matériaux de construction à base de gypse, d'anhydrite ou d'autres sulfates de calcium, des compositions céramiques, des compositions réfractaires, des matériaux de construction pour les champs pétrolifères et des matériaux de construction à base de dispersions.

15. Utilisation selon la revendication 13 ou 14, **caractérisée en ce que** les compositions de polymère pulvérulentes sont combinées avec d'autres additifs de matériaux de construction et des mélanges de charges.

16. Utilisation selon la revendication 15, **caractérisée en ce que** les autres additifs de matériaux de construction sont choisis parmi des poudres de dispersion, des agents de rétention d'eau, des épaississants, des retardateurs, des accélérateurs et des agents mouillants.
